(19) Europäisches Patentamt
European Patent Office
Office européen des brevets

(11) EP 0 818 144 B1

(12) **EUROPÄISCHE PATENTSCHRIFT**

(45) Veröffentlichungstag und Bekanntmachung des Hinweises auf die Patenterteilung:
**30.08.2000 Patentblatt 2000/35**

(51) Int Cl.$^7$: **A01N 43/54**
// (A01N43/54, 43:36)

(21) Anmeldenummer: **97116592.3**

(22) Anmeldetag: **20.06.1994**

# (54) Mikrobizide

Microbicides

Microbicides

(84) Benannte Vertragsstaaten:
**AT BE CH DE DK ES FR GB GR IE IT LI LU NL PT SE**

(30) Priorität: **28.06.1993 CH 192093**
**16.07.1993 CH 215493**
**27.04.1994 CH 130694**

(43) Veröffentlichungstag der Anmeldung:
**14.01.1998 Patentblatt 1998/03**

(62) Dokumentnummer(n) der früheren Anmeldung(en) nach Art. 76 EPÜ:
**94810360.1 / 0 630 569**

(73) Patentinhaber:
- **Novartis AG**
  **4058 Basel (CH)**
  Benannte Vertragsstaaten:
  **BE CH DE DK ES FR GB GR IE IT LI LU NL PT SE**
- **Novartis-Erfindungen Verwaltungsgesellschaft m.b.H.**
  **1235 Wien (AT)**
  Benannte Vertragsstaaten:
  **AT**

(72) Erfinder:
- **Zeun, Ronald**
  **79395 Neuenburg (DE)**
- **Knauf-Beiter, Gertrude**
  **79379 Müllheim (DE)**
- **Küng, Ruth Beatrice**
  **4123 Allschwil (CH)**

(56) Entgegenhaltungen:
**EP-A- 0 354 182**
**EP-A- 0 548 025**
**EP-A- 0 488 945**
**GB-A- 2 242 131**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue mikrobizide Wirkstoff-Gemische mit synergistisch gesteigerter Wirkung, enthaltend mindestens zwei Wirkstoff-Komponenten, und Verfahren zur Anwendung solcher Gemische im Pflanzenschutz.

Die Komponente I ist eine Verbindung ausgewählt aus der Gruppe

IB) 4-(2,2-Difluoro-1,3-benzodioxol-4-yl)-1H-pyrrol-3-carbonitril, ("Fludioxonil"; Referenz: EP-A-206,999);

ID) eine Verbindung der Formel ID,

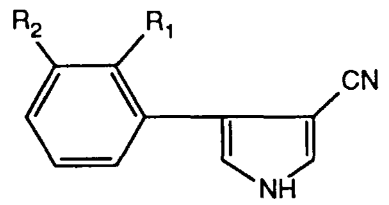

ID

worin

$R_1$ Fluor oder Chlor und
$R_2$ Chlor oder Trifluormethyl bedeuten. (Referenzen: EP-A-236,272; DE 2,927,480).

Die Komponente II ist das 2-Anilinopyrimidin der Formel II

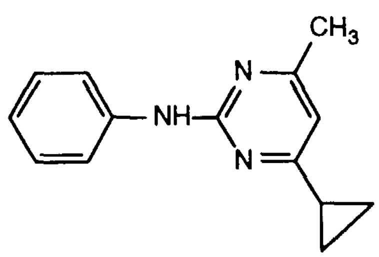

II

4-Cyclopropyl-6-methyl-N-phenyl-2-pyrimidinamin oder eines seiner Salze oder seiner Metallkomplexe (Referenz: EP-A-310 550).

Unter den Verbindungen der Formel ID ist diejenige bevorzugt, worin $R_1$ und $R_2$ Chlor bedeuten: 4-(2,3-Dichlorphenyl)1H-pyrrol-3-carbonitril ("Fenpiclonil").

Der Begriff Salze schliesst auch Metallkomplexe von basischen Komponenten I und II ein. Diese Komplexe können wahlweise nur eine Komponente oder auch beide Komponenten unabhängig betreffen. Es lassen sich auch Metallkomplexe herstellen, die beide Wirkstoffe I und II miteinander zu einem gemischten Komplex verbinden.

Metallkomplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink usw. Bevorzugt sind die Nebengruppen-Elemente der 4.Periode. Die Metalle können dabei in den verschiedenen ihnen zukommenden Wertigkeiten vorliegen. Die Metallkomplexe können ein- oder mehrkernig auftreten, d.h. sie können ein oder mehrere organische Molekülanteile als Liganden enthalten.

Dem erfindungsgemässen Wirkstoffgemisch kann man auch weitere agrarchemische Aktivsubstanzen wie Insektizide, Akarizide, Nematizide, Herbizide, Wuchsregulatoren und Düngemittel, insbesondere aber weitere Mikrobizide, zufügen.

Aus EP-A-548,025 sind synergistische Gemische von cyprodinil mit Azolfungiziden bekannt, während EP-A-488,945, EP-A-354,182 und GB-A-2242131 Gemische von Fludioxinil, Fenpiclonil bzw. Cyanopyrrolen entsprechend Formel ID ebenfalls mit Azolfungiziden offenbaren.

Es hat sich nun überraschenderweise gezeigt, dass auch Mischungen der Komponenten I und II in ihrer fungiziden Wirkung nicht nur additive Wirkung, sondern deutliche synergistisch gesteigerte Wirkung entfalten.

Die vorliegende Erfindung stellt daher eine ganz wesentliche Bereicherung der Technik dar.

Gegenstand der vorliegenden Erfindung ist auch ein Verfahren zur Bekämpfung von Pilzen, das gekennzeichnet ist durch Behandlung einer durch Pilze befallenen oder gefährdeten Stelle in beliebiger Reihenfolge oder gleichzeitig mit a) einem Wirkstoff der Formel I oder einem seiner Salze, und mit b) dem Wirkstoff der Formel II oder einem seiner Salze, wobei die Salze auch so gewählt sein können, dass beide Wirkstoffe an einem Säurerest oder, im Falle eines Metallkomplexes, an ein zentrales Metall-Kation gebunden sind.

Günstige Mischungsverhältnisse der beiden Wirkstoffe sind I:II = 1:20 bis 10:1, bevorzugt
I:II = 1:6 bis 6:1.
Besonders günstige Mischungsverhältnisse sind
IB:II = 5:1 bis 1:5,
ID:II = 5:1 bis 1:5.

Die erfindungsgemässen Wirkstoffmischungen I+II besitzen sehr vorteilhafte kurative, präventive und systemische Fungizid-Eigenschaften zum Schutz von Pflanzen. Mit den vorliegenden Wirkstoffmischungen können an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Mikroorganismen verschont bleiben. Sie können auch als Beizmittel zur Behandlung von Pflanzenvermehrungsgut, insbesondere von Saatgut (Früchte, Knollen, Körner) und Pflanzenstecklingen (z.B. Reis) zum Schutz vor Pilzinfektionen sowie gegen im Erdboden auftretende phytopathogene Pilze eingesetzt werden. Die erfindungsgemässen Wirkstoff-Gemische zeichnen sich durch besonders gute Pflanzenverträglichkeit und durch Umweltfreundlichkeit aus.

Die Wirkstoff-Gemische sind gegen die den folgenden Klassen angehörenden phytopathogenen Pilze wirksam: Ascomyceten (z.B. Venturia, Podosphaera, Erysiphe, Monilinia, Uncinula); Basidiomyceten (z.B. die Gattung Hemileia, Rhizoctonia, Puccinia); Fungi imperfecti (z.B. Botrytis, Helminthosporium, Rhynchosporium, Fusarium, Septoria, Cercospora, Alternaria, Pyricularia und insbesondere Pseudocercosporella herpotrichoides); Oomyceten (z.B. Phytophthora, Pernospora, Bremia, Pythium, Plasmopara).

Als Zielkulturen für die hierin offenbarten Indikationsgebiete gelten im Rahmen dieser Erfindung z.B. folgende Pflanzenarten: Getreide: (Weizen, Gerste, Roggen, Hafer, Reis, Sorghum und Verwandte); Rüben: (Zucker- und Futterrüben); Kern-, Stein- und Beerenobst: (Aepfel, Birnen, Pflaumen, Pfirsiche, Mandeln, Kirschen, Erdbeeren, Himbeeren und Brombeeren); Hülsenfrüchte: (Bohnen, Linsen, Erbsen, Soja); Oelkulturen: (Raps, Senf, Mohn, Oliven, Sonnenblumen, Kokos, Rizinus, Kakao, Erdnüsse); Gurkengewächse: (Kürbis, Gurken, Melonen); Fasergewächse: (Baumwolle, Flachs, Hanf, Jute); Citrusfrüchte: (Orangen, Zitronen, Grapefruit, Mandarinen); Gemüsesorten (Spinat, Kopfsalat, Spargel, Kohlarten, Möhren, Zwiebeln, Tomaten, Kartoffeln, Paprika); Lorbeergewächse: (Avocado, Cinnamonum, Kampfer) oder Pflanzen wie Mais, Tabak, Nüsse, Kaffee, Zuckerrohr, Tee, Weinreben, Hopfen, Bananen- und Naturkautschukgewächse sowie Zierpflanzen (Blumen, Sträucher, Laubbäume und Nadelbäume wie Koniferen). Diese Aufzählung stellt keine Limitierung dar.

Besonders vorteilhaft sind die erfindungsgemässen Wirkstoffgemische für folgende Anwendungen:

IB+II: in Weinreben und Gemüse, sowie zur Behandlung von pflanzlichem Vermehrungsgut, wie z.B. Saatgut, Knollen und Stecklinge;
ID+II: zur Behandlung von pflanzlichem Vermehrungsgut, wie z.B. Saatgut, Knollen und Stecklinge.

Die Wirkstoff-Gemische der Formeln I und II werden üblicherweise in Form von Zusammensetzungen verwendet. Die Wirkstoffe der Formel I und der Wirkstoff der Formel II können gleichzeitig, können aber auch nacheinander am selben Tage auf die zu behandelnde Fläche oder Pflanze gegeben werden, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen eines Wirkstoff-Gemisches das mindestens je einen dieser Wirkstoffe I und II enthält, ist das Aufbringen auf die oberirdischen Pflanzenteile, vor allem das Blattwerk (Blattapplikation). Anzahl der Applikationen und Aufwandmenge richten sich nach den biologischen und klimatischen Lebensbedingungen für den Erreger. Die Wirkstoffe können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt z.B. in Form von Granulat (Bodenapplikation). Die Verbindungen der Formeln I und II können auch zur Saatgutbehandlung auf Samenkörner aufgebracht werden (Coating), indem man die Knollen bzw. Körner entweder nacheinander in einer flüssigen Zubereitung eines Wirkstoffs tränkt oder sie mit einer bereits

kombinierten feuchten oder trockenen Zubereitung beschichtet. Darüberhinaus sind in besonderen Fällen weitere Applikationsarten bei Pflanzen möglich, z.B. die gezielte Behandlung der Knospen oder der Fruchtstände.

Die Verbindungen der Kombination werden dabei in unveränderter Form oder vorzugsweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, oder durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen des Wirkstoffgemischs liegen im allgemeinen bei 50 g bis 2 kg AS/ha, insbesondere bei 100 g bis 1000 g AS/ha, besonders bevorzugt bei 400 g bis 1000 g AS/ha. Für die Saatgutbehanlung sind die Aufwandmengen 0.5 g-1000 g, vorzugsweise 5 g-100 g AS pro 100 kg Saatgut.

Die Formulierungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethylether oder -ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehl verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art der zu formulierenden Wirkstoffe der Formeln I und II nichtionogene, kation- und/oder anionaktive Tenside mit guten Emulgier-, Dispergier- und Netzeigenschaften in Betracht. Unter Tensiden sind auch Tensidgemische zu verstehen.

Die in der Formulierungstechnik gebräuchlichen Tenside sind u.a. in folgenden Publikationen erschienen:

- "Mc Cutcheon's Detergents and Emulsifiers Annual" MC Publishing Corp., Glen Rock, New Jersey, 1988.
- M. and J. Ash, "Encyclopedia of Surfactants", Vol. I-III, Chemical Publishing Co., New York, 1980-1981.

Besonders vorteilhafte, applikationsfördernde Zuschlagstoffe sind ferner natürliche oder synthetische Phospholipide aus der Reihe der Kephaline und Lecithine, wie z.B. Phosphatidylethanolamin, Phosphatidylserin, Phosphatidylglycerin, Lysolecithin.

Die agrochemischen Zubereitungen enthalten in der Regel 0,1 bis 99 %, insbesondere 0,1 bis 95 % Wirkstoffe der Formeln I und II, 99,9 bis 1 %, insbesondere 99,9 bis 5 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Derartige (agro)chemische Mittel sind ein Bestandteil der vorliegenden Erfindung.

Die nachfolgenden Beispiele dienen der Illustration der Erfindung, wobei "Wirkstoff" ein Gemisch aus Verbindung I und Verbindung II in einem bestimmten Mischungs-Verhältnis bedeutet.

<u>Formulierungsbeispiele</u>

| Spritzpulver | a) | b) | c) |
|---|---|---|---|
| Wirkstoff [I:II = 1:3(a), 1:2(b), 1:1(c)] | 25 % | 50 % | 75 % |
| Na-Ligninsulfonat | 5% | 5% | - |
| Na-Laurylsulfat | 3% | - | 5% |
| Na-Diisobutylnaphthalinsulfonat | - | 6 % | 10 % |

(fortgesetzt)

| Spritzpulver | a) | b) | c) |
|---|---|---|---|
| Octylphenolpolyethylenglykolether (7-8 Mol Ethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff (I:II = 1:6) | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Verdünnung hergestellt werden, die sich im Pflanzenschutz, einsetzen lassen.

| Stäubemittel | a) | b) | c) |
|---|---|---|---|
| Wirkstoff [I:II = 1:4 (a); 1:5 (b) und 1:1 (c)] | 5% | 6% | 4% |
| Talkum | 95% | - | - |
| Kaolin | - | 94% | - |
| Gesteinsmehl | - | - | 96 % |

Man erhält anwendungsfertige Stäubemittel, indem der Wirkstoff mit dem Träger vermischt und auf einer geeigneten Mühle vermahlen wird. Solche Pulver lassen sich auch zur Trockenbeize für Saatgut verwenden.

| Extruder Granulat | |
|---|---|
| Wirkstoff (I:II = 1:1,5) | 15 % |
| Na-Ligninsulfonat | 2 % |
| Carboxymethylcellulose | 1 % |
| Kaolin | 82 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff (I:II = 3:5) | 8% |
| Polyethylenglykol (MG 200) | 3 % |
| Kaolin (MG = Molekulargewicht) | 89 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| Suspensions-Konzentrat | |
|---|---|
| Wirkstoff (I:II = 3:7) | 40 % |
| Propylenglykol | 10 % |
| Nonylphenolpolyethylenglykolether (15 Mol Et-oxid) | 6 % |

(fortgesetzt)

| Suspensions-Konzentrat | |
|---|---|
| Na-Ligninsulfonat | 10 % |
| Carboxymethylcellulose | 1 % |
| Silikonöl (in Form 75%ig. wässriger Emulsion) | 1 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Verdünnung hergestellt werden können. Mit solchen Verdünnungen kann man lebende Pflanzen sowie pflanzliches Vermehrungsgut durch Besprühen, Begiessen oder Eintauchen behandeln und vor Mikoorganismen-Befall schützen.

Biologische Beispiele

Ein synergistischer Effekt liegt bei Fungiziden immer dann vor, wenn die fungizide Wirkung der Wirkstoffkombination grösser ist als die Summe aus der Wirkung der einzeln applizierten Wirkstoffe.
Die zu erwartende Wirkung E für eine gegebene Wirkstoff-Kombination, z.B. zweier Fungizide, gehorcht der sogenannten COLBY-Formel und kann wie folgt berechnet werden, (COLBY, S.R. "Calculating synergistic and antagonistic responses of herbicide combination". Weeds, Vol.15, Seiten 20-22; 1967):

ppm = Milligramm Wirkstoff (=WS) pro Liter Spritzbrühe
X = % Wirkung durch Fungizid I bei Anwendung von p ppm Wirkstoff
Y = % Wirkung durch Fungizid II bei Anwendung von q ppm Wirkstoff
E = die erwartete Wirkung der Fungizide I+II bei Anwendung von p+q ppm Wirkstoff (additive Wirkung),

dann ist nach Colby:

$$E = X + Y - \frac{X \cdot Y}{100}$$

Wenn die tatsächlich beobachtete Wirkung (O) grösser ist als die erwartete (E), so ist die Kombination in ihrer Wirkung überadditiv, d.h. es liegt ein synergistischer Effekt vor.
O/E = Synergiefaktor (SF).
In den folgenden Beispielen wird der Befall der unbehandelten Pflanzen gleich 100% gesetzt, was einer Wirkung von 0% entspricht.

Beispiel 1: Wirkung gegen Botrytis cinerea auf Aepfeln

Künstlich verletzte Aepfel werden behandelt, indem eine Spritzbrühe (30 Mikroliter des Wirkstoffes bzw. der Wirkstoffkombination) auf die Verletzungsstelle aufgetropft wird. Die behandelten Früchte werden anschliessend mit einer Sporensuspension des Pilzes inokuliert und während einer Woche bei hoher Luftfeuchtigkeit bei ca. 20°C inkubiert. Aus der Anzahl und Grösse der angefaulten Verletzungsstellen wird die fungizide Wirkung der Testsubstanz abgeleitet. Dabei werden folgende Resultate erzielt:

Tab.1.

| Wirkstoff IB: Fludioxonil | | | | | | |
|---|---|---|---|---|---|---|
| Vers. Nr. | mg WS pro Liter | | I:II | % Wirkung | | |
| | WS IB | WS II | | gefunden O | berechnet E | SF O/E |
| 0 | -- | -- | | 0 (Kontrolle) | | |
| 1 | 0.2 | -- | | 0 | | |
| 2 | 0.6 | -- | | 20 | | |
| 3 | 2 | -- | | 40 | | |
| 4 | 6 | -- | | 90 | | |

Tab.1. (fortgesetzt)

| Wirkstoff IB: Fludioxonil | | | | | | |
|---|---|---|---|---|---|---|
| Vers. Nr. | mg WS pro Liter | | I:II | % Wirkung | | |
| | WS IB | WS II | | gefunden O | berechnet E | SF O/E |
| 5 | -- | 0.2 | | 0 | | |
| 6 | -- | 0.6 | | 0 | | |
| 7 | -- | 2 | | 20 | | |
| 8 | -- | 20 | | 95 | | |
| 9 | 0.6 | 2 | 1:3 | 40 | 36 | 1.1 |
| 10 | 0.6 | 0.2 | 3:1 | 40 | 20 | 2.0 |
| 11 | 2 | 0.2 | 10:1 | 98 | 40 | 2.4 |
| 12 | 2 | 0.6 | 3:1 | 98 | 40 | 2.4 |
| 13 | 2 | 2 | 1:1 | 95 | 52 | 1.8 |
| 14 | 6 | 0.2 | 30:1 | 100 | 90 | 1.1 |

Beispiel 2: Wirkung gegen Botrytis cinerea auf Weinreben

5 Wochen alte Rebensämlinge werden mit einer aus der formulierten Prüfsubstanz hergestellten Suspension besprüht und nach 2 Tagen mit einer Konidiensuspension von B.cinerea infiziert. Nach 4-tätiger Inkubation bei 21°C und 95-100% rel. Luftfeuchtigkeit im Gewächshaus wird der Befall beurteilt. Dabei werden folgende Resultate erzielt:

Tab.2:

| Wirkstoff IB: Fludioxonil | | | | | | |
|---|---|---|---|---|---|---|
| Vers. Nr. | mg WS pro Liter | | I:II | % Wirkung | | |
| | WS IB | WS II | | gefunden O | berechnet E | SF O/E |
| 0 | -- | -- | | 0 (Kontrolle) | | |
| 1 | 0.6 | -- | | 0 | | |
| 2 | 2 | -- | | 80 | | |
| 3 | 6 | -- | | 90 | | |
| 4 | -- | 0.2 | | 0 | | |
| 5 | -- | 0.6 | | 0 | | |
| 6 | -- | 2 | | 20 | | |
| 7 | -- | 20 | | 90 | | |
| 8 | 2 | 0.6 | 3:1 | 90 | 80 | 1.12 |
| 9 | 0.6 | 0.2 | 3.1 | 20 | 0 | * |
| 10 | 2 | 0.2 | 10:1 | 98 | 80 | 1.22 |

*Synergiefaktor SF nicht berechenbar.

Beispiel 3: Wirkung gegen Venturia inaequalis auf Aepfeln

Apfelstecklinge mit 10 bis 20 cm langen Frischtrieben werden mit einer aus dem formulierten Wirkstoff bzw. Wirkstoffkombination hergestellten Spritzbrühe tropfnass eingesprüht Nach 24 Stunden werden die behandelten Pflanzen mit einer Konidiensuspension des Pilzes infiziert, anschliessend werden die behandelten Pflanzen während 3 Tagen bei 90-100% relativer Luftfeuchtigkeit und bei 20°C inkubiert und während weiteren 10 Tagen im Gewächshaus bei 20-24°C aufgestellt. 14 Tage nach der Infektion wird der Pilzbefall beurteilt. Dabei werden folgende Resultate erzielt:

Tab.3a:

| Wirkstoff IB: Fludioxonil | | | | | | |
|---|---|---|---|---|---|---|
| Vers. Nr. | mg WS pro Liter | | I:II | % Wirkung | | |
| | WS IB | WS II | | gefunden O | berechnet E | SF O/E |
| 0 | -- | -- | | 0 (Kontrolle) | | |
| 1 | 2 | -- | | 40 | | |
| 2 | -- | 2 | | 20 | | |
| 3 | 2 | 2 | 1:1 | 73 | 52 | 1.4 |

Beispiel 4: Wirkung gegen Pyrenophora teres auf Gerste

6 Tage alte Gerstenpflanzen werden mit einer aus dem formulierten Wirkstoff bzw. Wirkstoffkombination hergestellten Spritzbrühe tropfnass besprüht. Nach 2 Tagen werden die Pflanzen mit Sporensuspension von Pyrenophora teres inokuliert und bei 21°C und 90-100% Luftfeuchtigkeit im Gewächshaus inkubiert. Nach einer Woche wird der Pilzbefall beurteilt. Dabei werden folgende Resultate erzielt:

Tab.4:

| Wirkstoff IB: Fludioxonil | | | | | | |
|---|---|---|---|---|---|---|
| Vers. Nr. | mg WS pro Liter | | I:II | % Wirkung | | |
| | WS IB | WS II | | gefunden O | berechnet E | SF O/E |
| 0 | -- | -- | | 0(Kontrolle) | | |
| 1 | 0.6 | -- | | 0 | | |
| 2 | 2 | -- | | 75 | | |
| 3 | 6 | -- | | 80 | | |
| 4 | -- | 0.6 | | 0 | | |
| 5 | -- | 2 | | 20 | | |
| 6 | -- | 20 | | 85 | | |
| 7 | 0.6 | 0.6 | 1:1 | 40 | 0 | * |
| 8 | 0.6 | 2 | 1:3 | 40 | 20 | 2 |
| 9 | 6 | 0.2 | 30:1 | 95 | 80 | 1.9 |

*Synergiefaktor SF nicht berechenbar.

## Patentansprüche

1. Pflanzenmikrobizides Mittel enthaltend mindestens zwei Wirkstoff-Komponenten in einem eine synergistische fungizide Wirkung erzeugenden Mengenverhältnis, dadurch gekennzeichnet, dass die Komponente I eine Verbindung ausgewählt aus der Gruppe

   IB) 4-(2,2-Difluoro-1,3-benzodioxol-4-yl)-1H-pyrrol-3-carbonitril, ("Fludioxonil");

   ID) eine Verbindung der Formel ID,

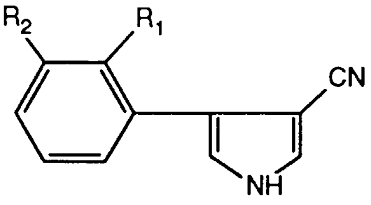

ID

worin

$R_1$ Fluor oder Chlor und
$R_2$ Chlor oder Trifluormethyl bedeuten;

und dass die Komponente II das 2-Anilinopyrimidin der Formel II

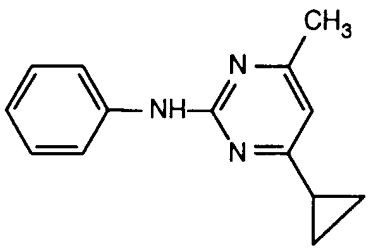

II

4-Cyclopropyl-6-methyl-N-phenyl-2-pyrimidinamin oder eines seiner Salze oder seiner Metallkomplexe ist.

**2.** Mittel gemäss Anspruch 1, worin die Komponente I die Verbindung IB), 4-(2,2-Difluoro-1,3-benzodioxol-4-yl)-1H-pyrrol-3-carbonitril, ("Fludioxonil") ist.

**3.** Mittel gemäss Anspruch 1, worin die Komponente I eine Verbindung der Formel ID,

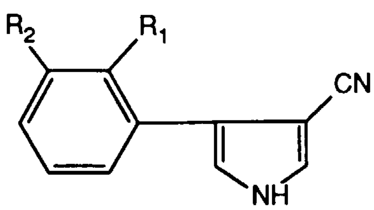

ID

worin

$R_1$ Fluor oder Chlor und
$R_2$ Chlor oder Trifluormethyl bedeuten; ist

**4.** Mittel gemäss Anspruch 3, worin die Komponente ID 4-(2,3-Dichlorphenyl)1H-pyrrol-3-carbonitril ("Fenpiclonil") ist.

**5.** Mittel gemäss Anspruch 1, dadurch gekennzeichnet, dass das Gewichtsverhältnis I:II = 1:20 bis 10:1 beträgt.

**6.** Mittel gemäss Anspruch 1, dadurch gekennzeichnet, dass das Gewichtsverhältnis I:II = 1:6 bis 6:1 beträgt.

**7.** Verwendung eines Mittels gemäss Anspruch 1 zur Bekämpfung und Verhütung von Pilzbefall auf Pflanzen.

**8.** Verfahren zur Bekämpfung und Verhütung von Pilzen auf Pflanzen, dadurch gekennzeichnet, dass man in beliebiger Reihenfolge oder gleichzeitig eine durch Pilze befallene oder gefährdete Stelle mit der Komponente I und der Komponente II gemäss Anspruch 1 behandelt.

**9.** Verfahren gemäss Anspruch 8, worin die Komponente I die Verbindung IB, 4 (2,2-Difluoro-1,3-benzodioxol-4-yl)-1H-pyrrol-3-carbonitril, ("Fludioxonil"), ist.

**10.** Verfahren gemäss Anspruch 8, worin die Komponente I die Verbindung ID, 4-(2,3-Dichlorphenyl)1H-pyrrol-3-carbonitril, ("Fenpiclonil"), ist.

**11.** Verfahren gemäss Anspruch 8, dadurch gekennzeichnet, dass pflanzliches Vermehrungsgut behandelt wird.

**12.** Verfahren gemäss Anspruch 11, dadurch gekennzeichnet, dass Saatgut behandelt wird.

**13.** Verfahren gemäss Anspruch 11, wobei als Komponente I die Verbindung der Formel IB, ("Fludioxonil"), verwendet wird.

**14.** Pflanzliches Vermehrungsgut, das gemäss Anspruch 11 behandelt wurde.

**Claims**

**1.** A plant-microbicidal composition comprising at least two active ingredient components in a quantity ratio producing a synergistic fungicidal action, wherein component I is a compound selected from the group

IB) 4-(2,2-difluoro-1,3-benzodioxol-4-yl)-1H-pyrrole-3-carbonitrile ("fludioxonil");

ID) a compound of formula ID

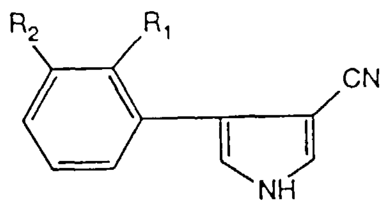

ID,

wherein

$R_1$ is fluorine or chlorine and
$R_2$ is chlorine or trifluoromethyl;

and component II is the 2-anilinopyrimidine of formula II

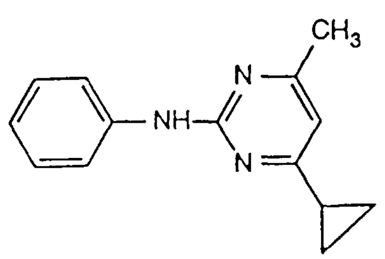

II,

4-cyclopropyl-6-methyl-N-phenyl-2-pyrimidineamine, or one of the salts or metal complexes thereof.

**2.** A composition according to claim 1 wherein component I is compound IB), 4-(2,2-difluoro-1,3-benzodioxol-4-yl)-1 H-pyrrole-3-carbonitrile ("fludioxonil").

**3.** A composition according to claim 1 wherein component I is a compound of formula ID

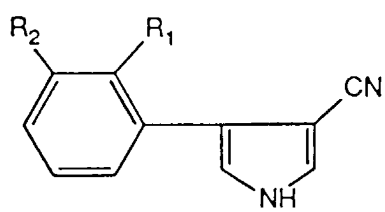

ID,

wherein

$R_1$ is fluorine or chlorine and
$R_2$ is chlorine or trifluoromethyl.

**4.** A composition according to claim 3 wherein component ID is 4-(2,3-dichlorophenyl)-1H-pyrrole-3-carbonitrile ("fenpiclonil").

**5.** A composition according to claim 1 wherein the ratio by weight of I:II = 1:20 to 10:1.

**6.** A composition according to claim 1 wherein the ratio by weight of I:II = 1:6 to 6:1.

**7.** The use of a composition according to claim 1 in the control and prevention of fungal infestation of plants.

**8.** A method of controlling and preventing the occurrence of fungi on plants, which comprises treating with component I and component II according to claim 1, in any desired order or simultaneously, a site infested by or threatened with infestation by fungi.

**9.** A method according to claim 8 wherein component I is compound IB, 4-(2,2-difluoro-1,3-benzodioxol-4-yl)-1H-pyrrole-3-carbonitrile ("fludioxonil").

**10.** A method according to claim 8 wherein component I is compound ID, 4-(2,3-dichlorophenyl)-1 H-pyrrole-3-carbonitrile ("fenpiclonil").

**11.** A method according to claim 8 wherein plant propagation material is treated.

**12.** A method according to claim 11 wherein seed is treated.

**13.** A method according to claim 11 wherein there is used as component I the compound of formula IB ("fludioxonil").

**14.** Plant propagation material treated in accordance with claim 11.

**Revendications**

**1.** Un agent microbicide végétal contenant au moins 2 composants actifs dans un rapport quantitatif produisant une action synergique fongicide, caractérisé en ce que le composant I est un composé choisi parmi le groupe

IB) le 4-(2,2-difluoro-1,3-benzodioxol-4-yl)-1H-pyrrol-3-carbonitrile ("fludioxonile");

ID) un composé de formule ID

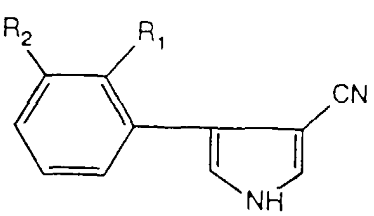

ID

où

$R_1$ signifie le fluor ou le chlore, et
$R_2$ signifie le chlore ou un groupe trifluorométhyle;

et en ce que le composant II est la 2-anilinopyrimidine de formule II,

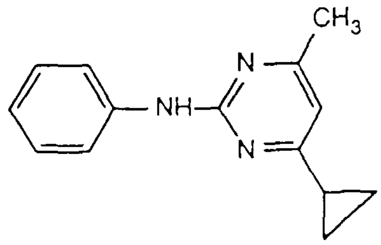

II

la 4-cyclopropyl-6-méthyl-N-phényl-2-pyrimidinamine ou un de ses sels ou de ses complexes métalliques.

**2.** Un agent selon la revendication 1, caractérisé en ce que le composant I est le composé IB) le 4-(2,2-difluoro-1,3-benzodioxol-4-yl)-1H-pyrrol-3-carbonitrile ("fludioxonile").

**3.** Un agent selon la revendication 1, caractérisé en ce que le composant I est un composé de formule ID

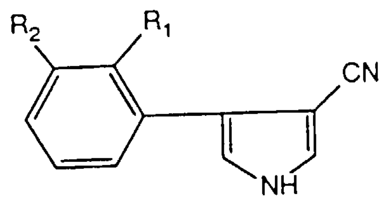

ID

où

$R_1$ signifie le fluor ou le chlore, et
$R_2$ signifie le chlore ou un groupe trifluorométhyle.

**4.** Un agent selon la revendication 3, caractérisé en ce que le composant ID est le 4-(2,3-dichlorophényl)1H-pyrrol-3-carbonitrile ("fenpiclonile").

**5.** Un agent selon la revendication 1, caractérisé en ce que le rapport pondéral I:II = 1:20 à 10:1.

**6.** Un agent selon la revendication 1, caractérisé en ce que le rapport pondéral I:II = 1:6 à 6:1.

**7.** Utilisation d'un agent selon la revendication 1 pour la lutte et la protection des plantes contre les infestations par des champignons.

**8.** Un procédé de lutte et de protection des plantes contre les champignons, caractérisé en ce qu'avec le composant I et le composant II selon la revendication 1, on traite, dans n'importe quel ordre ou simultanément, un endroit infesté ou menacé par des champignons

**9.** Un procédé selon la revendication 8, caractérisé en ce que le composant I est le composé IB, le 4-(2,2-difluoro-1,3-benzodioxol-4-yl)-1H-pyrrol-3-carbonitrile ("fludioxonile").

**10.** Un procédé selon la revendication 8, caractérisé en ce que le composant I est le composé ID, le 4-(2,3-dichlorophényl)1H-pyrrol-3-carbonitrile ("fenpiclonile").

**11.** Un procédé selon la revendication 8, caractérisé en ce que on traite l'organe de propagation des plantes.

**12.** Un procédé selon la revendication 11, caractérisé en ce qu'on traite les semences.

**13.** Un procédé selon la revendication 11, caractérisé en ce que comme composant I, on utilise le composé de formule IB ("fludioxonile").

**14.** Un organe de propagation des plantes qui est traité selon la revendication 11.